(19) Europäisches Patentamt / European Patent Office / Office européen des brevets

(11) **EP 3 764 054 B1**

(12) **EUROPÄISCHE PATENTSCHRIFT**

(45) Veröffentlichungstag und Bekanntmachung des Hinweises auf die Patenterteilung:
**13.07.2022   Patentblatt 2022/28**

(21) Anmeldenummer: **20167471.0**

(22) Anmeldetag: **01.04.2020**

(51) Internationale Patentklassifikation (IPC):
**G01B 7/00** *(2006.01)*      **B23H 7/10** *(2006.01)*

(52) Gemeinsame Patentklassifikation (CPC):
**B23H 7/02; B23H 7/10; G01B 7/24; B23H 2500/20**

(54) **SENSORANORDNUNG ZUM ERFASSEN EINER AUSLENKUNG EINER DRAHTELEKTRODE**

SENSOR ARRANGEMENT FOR DETECTING A DEFLECTION OF A WIRE ELECTRODE

AGENCEMENT DE CAPTEUR PERMETTANT DE DÉTECTER UNE DÉVIATION D'UNE FIL ÉLECTRODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2019   DE 102019210301**

(43) Veröffentlichungstag der Anmeldung:
**13.01.2021   Patentblatt 2021/02**

(73) Patentinhaber: **Dr. Johannes Heidenhain GmbH 83301 Traunreut (DE)**

(72) Erfinder:
• **NUTZINGER, Tarek 83377 Vachendorf (DE)**
• **HEUMANN, Martin 83278 Traunstein (DE)**

(56) Entgegenhaltungen:
**DE-A1- 2 826 270     JP-A- S57 139 604**

**Beschreibung**

## GEBIET DER TECHNIK

Die vorliegende Erfindung betrifft eine Sensoranordnung zum Erfassen einer Auslenkung einer Drahtelektrode nach dem Oberbegriff des Anspruchs 1.

## STAND DER TECHNIK

Eine gattungsgemäße Sensoranordnung ist aus DE 28 26 270 A1 bekannt. Die Sensoranordnung umfasst vier Messelektroden, die jeweils in einer der vier Hauptachsenrichtungen X+, X-, Y+, Y- von der Drahtelektrode beabstandet angeordnet sind. Die gesamte Anordnung wird von einem Dielektrikum mit einem Leitwert von 1 bis 100 $\mu$S/cm durchströmt. Die Messung der Auslenkung der Drahtelektrode in XY-Richtung erfolgt durch eine Detektion der Änderung der Widerstände zwischen den vier Messelektroden und der Drahtelektrode, die als Gemeinschaftselektrode für alle vier Messzellen dient.

## ZUSAMMENFASSUNG DER ERFINDUNG

Der Erfindung liegt die Aufgabe zugrunde, eine Sensoranordnung zum Erfassen einer Auslenkung einer Drahtelektrode anzugeben, die einfach und kompakt aufgebaut ist und mit der eine präzise Detektion der Drahtelektrode ermöglicht wird.

Diese Aufgabe wird erfindungsgemäß durch eine Sensoranordnung mit den Merkmalen des Anspruchs 1 gelöst.

Die erfindungsgemäß ausgebildete Sensoranordnung dient zum Erfassen einer Auslenkung einer Drahtelektrode einer Drahterodiermaschine in Bezug auf einen auf einer Referenzachse liegenden ersten Referenzpunkt in einer ersten Messebene. Die erste Messebene wird durch den ersten Referenzpunkt und durch eine erste Auslenkrichtung und eine zur ersten Auslenkrichtung senkrecht verlaufende zweite Auslenkrichtung definiert. Die erste und zweite Auslenkrichtung verlaufen jeweils senkrecht zur Referenzachse. Die Sensoranordnung weist eine Spulenelementanordnung auf. Die Spulenelementanordnung weist mindestens ein in der ersten Messebene angeordnetes erstes bis viertes Spulenelement zum Erfassen eines durch die Drahtelektrode erzeugten magnetischen Wechselfelds und zum Erzeugen eines ersten bis vierten Messsignals auf. Das erste bis vierte Spulenelement sind in einer ersten Ebene und in einer zweiten Ebene derart angeordnet, dass sie sich in Bezug auf den ersten Referenzpunkt jeweils paarweise in der ersten und zweiten Auslenkrichtung einander gegenüberliegen. Die erste Ebene und die zweite Ebene erstrecken sich jeweils parallel zur Referenzachse. Die erste und zweite Ebene sind in Bezug auf den ersten Referenzpunkt in der zweiten Auslenkrichtung voneinander beabstandet und einander gegenüberliegend angeordnet.

Vorzugsweise sind die erste und zweite Ebene parallel zueinander angeordnet.

Eine Drahterodiermaschine mit der erfindungsgemäßen Sensoranordnung und einer Drahtelektrode, wobei sich die Drahtelektrode in einem unausgelenkten Zustand kollinear zur Referenzachse durch den ersten Referenzpunkt erstreckt, ist im Anspruch 19 angegeben.

Es ist vorteilhaft, wenn die Drahterodiermaschine einen Signalgenerator zum Erzeugen eines Wechselstromimpulses aufweist und wenn die Drahtelektrode derart ausgebildet ist, dass bei einer Beaufschlagung derselben mit dem Wechselstromimpuls das zu erfassende magnetische Wechselfeld erzeugt wird. Die Drahtelektrode dient einerseits zum Erzeugen des magnetischen Wechselfelds und andererseits zur Bearbeitung eines in der Drahterodiermaschine befindlichen Werkstücks. Im Betrieb verläuft das magnetische Wechselfeld in einer Umfangsrichtung um die Drahtelektrode.

Durch die Erfindung wird mit einer einfach und kompakt aufgebauten Sensoranordnung eine genaue Positionierung und Ausrichtung von einzelnen, eine gemeinsame Einheit bildenden Spulenelementen relativ zueinander und in Bezug auf einen Referenzpunkt der Sensoranordnung ermöglicht. Dadurch wird eine hohe Genauigkeit der Detektion der Drahtelektrode erreicht. Die Erfindung ermöglicht zudem die Realisierung einer berührungslosen, zweidimensionalen Detektion der Drahtelektrode in einer Messebene. Dabei kann insbesondere auf die Verwendung eines für eine Widerstandsmessung erforderlichen Dielektrikums zwischen der Drahtelektrode und mehreren Messelektroden verzichtet werden.

Vorteilhafte Ausbildungen der Erfindung entnimmt man den abhängigen Ansprüchen.

## KURZE BESCHREIBUNG DER ZEICHNUNGEN

Einzelheiten und Vorteile der erfindungsgemäßen Sensoranordnung ergeben sich aus der nachfolgenden Beschreibung von Ausführungsbeispielen anhand der beiliegenden Figuren.

Es zeigen

Figur 1    eine perspektivische Ansicht einer beispielhaften Sensoranordnung mit einem in einer ersten Messebene angeordneten ersten bis vierten Spulenelement;

Figur 2    eine Seitenansicht der Sensoranordnung nach Fig. 1;

Figur 3    einen Querschnitt der Sensoranordnung nach Fig. 1 in der Schnittebene D-D von Fig. 2;

Figur 4    eine Schnittdarstellung einer beispielhaften Sensoranordnung mit einem in einer ersten Messebene angeordneten ersten bis vierten Spulenelement und einem Träger, wobei der Träger durch einen einzigen gemeinsamen Abschnitt gebildet ist;

Figur 5    eine Schnittdarstellung einer beispielhaften Sensoranordnung mit einem in einer ersten Messebene angeordneten ersten bis vierten Spulenelement und einem Träger, wobei der Träger zwei voneinander getrennte Abschnitte aufweist;

Figur 6    eine Schnittdarstellung einer beispielhaften Sensoranordnung mit einem in einer ersten Messebene angeordneten ersten bis vierten Spulenelement und einem Träger, wobei der Träger zwei voneinander getrennte Abschnitte aufweist;

Figur 7    eine Seitenansicht einer beispielhaften Sensoranordnung mit einem in einer ersten Messebene angeordneten ersten bis vierten Spulenelement und jeweils zugeordneten Referenzspulenelementen;

Figur 8    eine schematische Darstellung zur Veranschaulichung eines zu erfassenden Winkels einer Drahtelektrode bei einer Auslenkung derselben in Bezug auf einen ersten und zweiten Referenzpunkt in einer ersten Auslenkrichtung;

Figur 9    eine schematische Darstellung zur Veranschaulichung eines durch die Drahtelektrode erzeugten magnetischen Wechselfelds; und

Figur 10   ein Blockdiagramm einer beispielhaften Sensoranordnung mit einer ersten und zweiten Auswerteeinheit zur Ermittlung des in Fig. 8 veranschaulichten Winkels.

## BESCHREIBUNG DER AUSFÜHRUNGSFORMEN

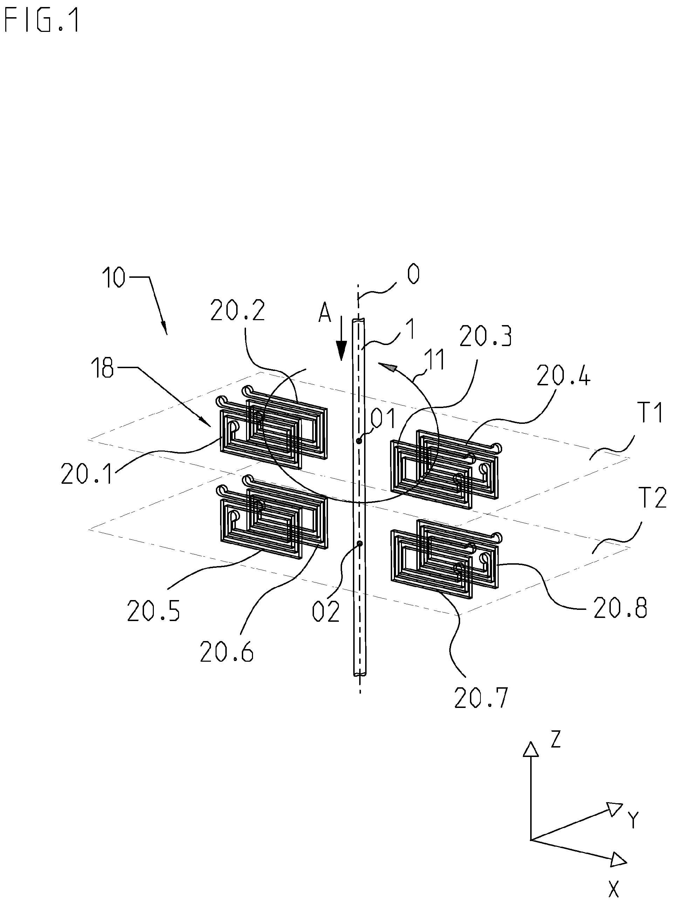

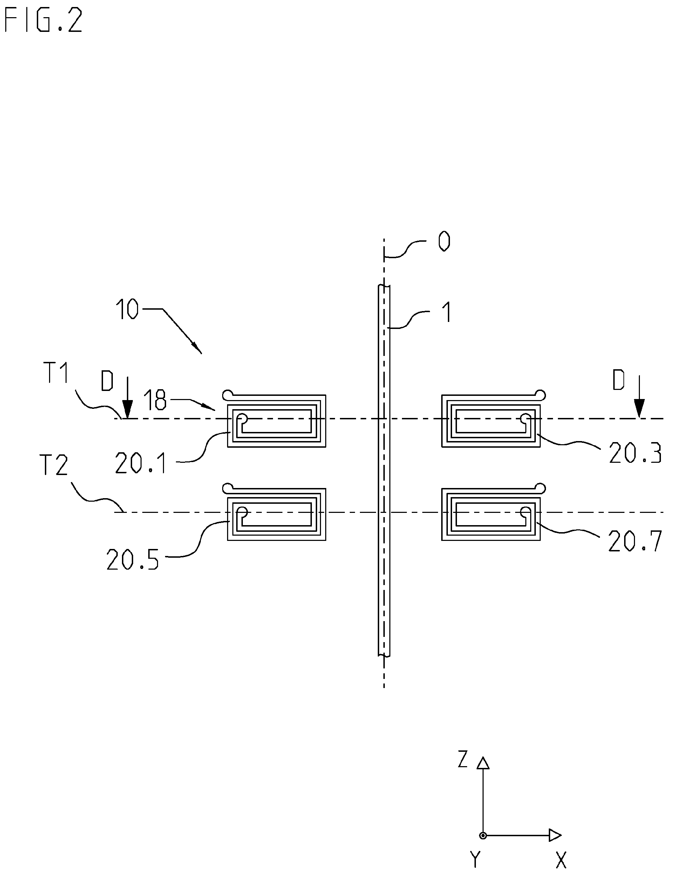

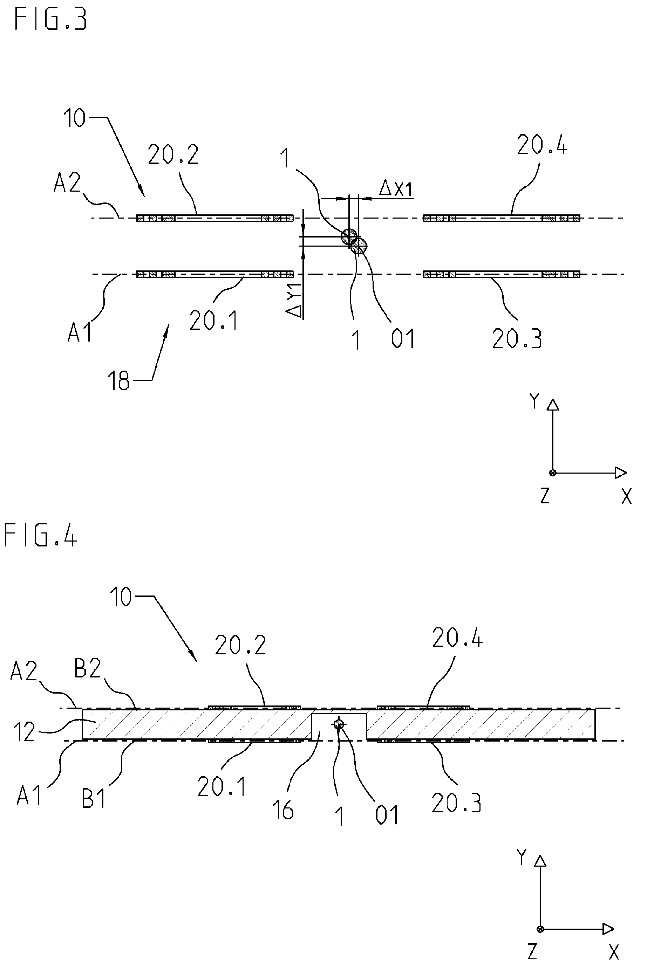

Eine beispielhafte Sensoranordnung 10 wird nachfolgend anhand der Figuren 1 bis 3 erläutert. Die Sensoranordnung 10 nach Fig. 1 bis 3 dient zum Erfassen einer Auslenkung $\Delta X1$, $\Delta Y1$ einer Drahtelektrode 1 einer Drahterodiermaschine in Bezug auf einen auf einer Referenzachse O liegenden ersten Referenzpunkt O1 in einer ersten Messebene T1. Die erste Messebene T1 wird durch den ersten Referenzpunkt O1 und durch eine erste Auslenkrichtung X und eine zur ersten Auslenkrichtung X senkrecht verlaufende zweite Auslenkrichtung Y definiert. Die erste und zweite Auslenkrichtung X, Y verlaufen jeweils senkrecht zur Referenzachse O. Der erste Referenzpunkt O1 und die Auslenkung $\Delta X1$, $\Delta Y1$ sind in Fig. 3 veranschaulicht. In Fig. 1 und 2 ist die Drahtelektrode 1 lediglich im unausgelenkten Zustand dargestellt. In Fig. 3 ist die Drahtelektrode 1 im unausgelenkten Zustand und in einem ausgelenkten Zustand dargestellt. Im unausgelenkten Zustand erstreckt sich die Drahtelektrode 1 durch den ersten Referenzpunkt O1. Die Referenzachse O ist durch eine Längserstreckung der Drahtelektrode 1 im unausgelenkten Zustand gegeben.

Wie in Fig. 1 gezeigt, ist die Drahtelektrode 1 in einer Vorschubrichtung A bewegbar. Die Drahtelektrode 1 dient zur Bearbeitung eines in der Drahterodiermaschine befindlichen Werkstücks.

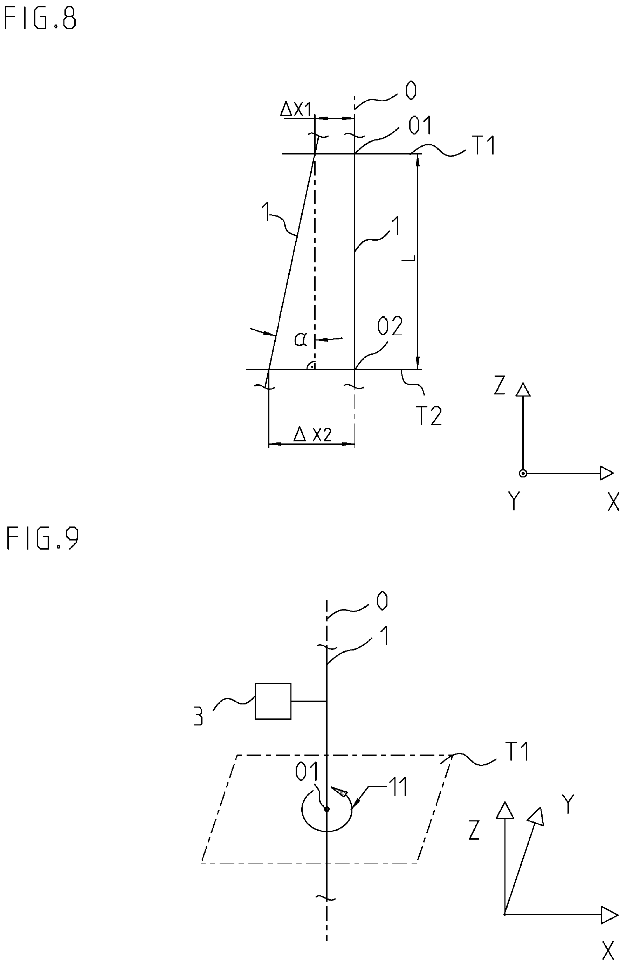

Die Sensoranordnung 10 nach Fig. 1 bis 3 weist eine Spulenelementanordnung 18 auf. Die Spulenelementanordnung 18 weist ein in der ersten Messebene T1 angeordnetes erstes bis viertes Spulenelement 20.1 bis 20.4 zum Erfassen eines durch die Drahtelektrode 1 erzeugten magnetischen Wechselfelds und zum Erzeugen eines ersten bis vierten Messsignals S1 bis S4 auf. Im Betrieb verläuft das magnetische Wechselfeld in einer Umfangsrichtung um die Drahtelektrode 1. Das magnetische Wechselfeld ist in Fig. 9 dargestellt und mit dem Bezugszeichen 11 versehen. Das magnetische Wechselfeld 11 verläuft entsprechend auch in einer zweiten Messebene T2.

In Bezug auf Fig. 3 sind das erste bis vierte Spulenelement 20.1 bis 20.4 in einer ersten Ebene A1 und in einer zweiten Ebene A2 derart angeordnet, dass sie sich in Bezug auf den ersten Referenzpunkt O1 jeweils paarweise in der ersten und zweiten Auslenkrichtung X, Y einander gegenüberliegen. Die erste Ebene A1 und die zweite Ebene A2 erstrecken sich jeweils parallel zur Referenzachse O. Die erste und zweite Ebene A1, A2 sind in Bezug auf den ersten Referenzpunkt O1 in der zweiten Auslenkrichtung Y voneinander beabstandet und einander gegenüberliegend angeordnet. Vorzugsweise sind die erste und zweite Ebene A1, A2 parallel zueinander angeordnet.

Das erste bis vierte Spulenelement 20.1 bis 20.4 sind derart angeordnet und ausgebildet, dass das in Umfangsrichtung um die Drahtelektrode 1 verlaufende magnetische Wechselfeld 11 im Wesentlichen senkrecht zu dem jeweiligen Spulenelement 20.1 bis 20.4 durch dasselbe hindurch verläuft (vgl. Fig. 1 und 9). Das erste bis vierte Messsignal S1 bis S4 des ersten bis vierten Spulenelements 20.1 bis 20.4 sind von der Auslenkung $\Delta X1$, $\Delta Y1$ abhängig.

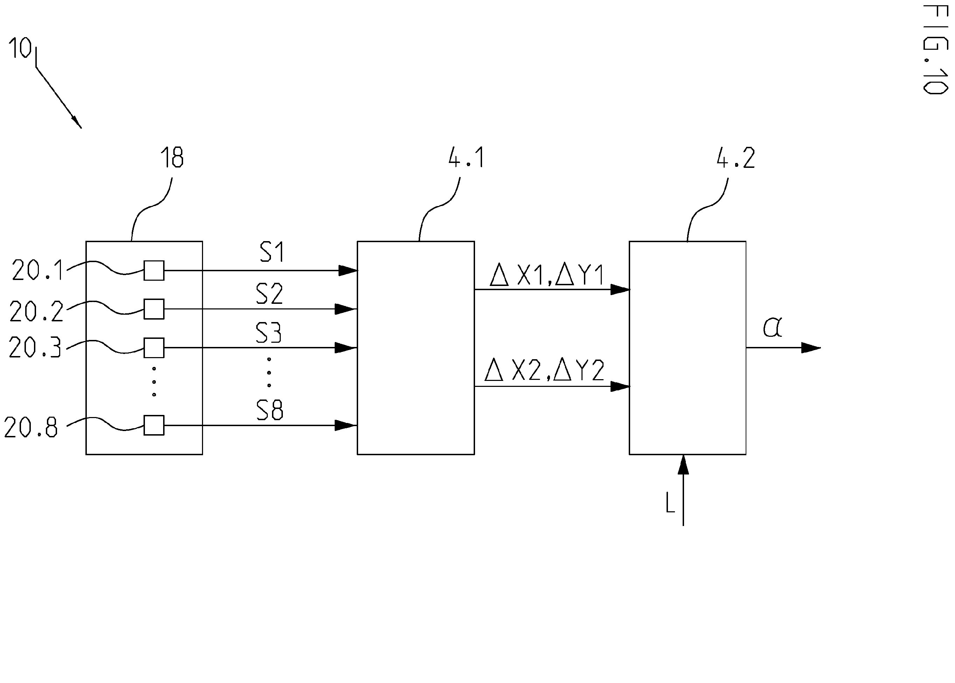

Zum Erfassen eines Winkels $\alpha$ (Fig. 8) der Drahtelektrode 1 kann die Sensoranordnung 10 zusätzlich zu dem ersten bis vierten Spulenelement 20.1 bis 20.4 ein in der zweiten Messebene T2 angeordnetes fünftes bis achtes Spulenelement 20.5 bis 20.8 der Spulenelementanordnung 18 aufweisen. Das fünfte bis achte Spulenelement 20.5 bis 20.8 dienen zum Erfassen des magnetischen Wechselfelds 11 und zum Erzeugen eines fünften bis achten Messsignals S5 bis S8. Der Einsatz des fünften bis achten Spulenelements 20.5 bis 20.8 wird später im Zusammenhang mit Fig. 8 und 10 noch näher erläutert.

Die beiden Messebenen T1, T2 sind in Richtung der Referenzachse O (Z-Achse) versetzt zueinander angeordnet (vgl. insbesondere Fig. 2). In der Seitenansicht von Fig. 2 sind die Spulenelemente 20.1, 20.3 und 20.5, 20.7 (vordere Spulenelemente) sichtbar, während die Spulenelemente 20.2, 20.4 und 20.6, 20.8 (hintere Spulenelemente) nicht sichtbar sind.

In Bezug auf Fig. 3 bilden das erste bis vierte Spulenelement 20.1 bis 20.4 eine Einheit, mit der eine präzise Detektion der Drahtelektrode 1 ermöglicht wird. Die Einheit ist einfach und kompakt aufgebaut. Es wird zum einen eine relativ komplizierte, insbesondere kreuzweise Anordnung vermieden. Zum anderen wird der Bedarf an Bauraum, insbesondere in der zweiten Auslenkrichtung Y, reduziert.

In den Figuren 4 bis 6 sind Schnittdarstellungen beispielhafter Sensoranordnungen 10 gezeigt. Die Sensoranordnungen 10 nach Fig. 4 bis 6 weisen jeweils ein in einer ersten Messebene (XY-Ebene) angeordnetes erstes bis viertes Spulenelement 20.1 bis 20.4 (obere, in Fig. 4 bis 6 sichtbare Spulenelemente) und einen Träger 12 auf. Das erste bis vierte Spulenelement 20.1 bis 20.4 der Sensoranordnungen 10 nach Fig. 4 bis 6 entsprechen jeweils dem ersten bis vierten Spulenelement 20.1 bis 20.4 der Sensoranordnung 10 nach Fig. 1 bis 3 und haben die gleiche Funktion. Die Schnittdarstellungen von Fig. 4 bis 6 entsprechen jeweils dem in Fig. 3 gezeigten Querschnitt. Im Folgenden werden anhand der Figuren 4 bis 6 verschiedene Ausgestaltungen des Trägers 12 erläutert. Der Träger 12 dient zum Tragen des ersten bis vierten Spulenelements 20.1 bis 20.4. Ferner kann der Träger 12 zum Tragen eines in einer zweiten Messebene (XY-Ebene) angeordneten fünften bis achten Spulenelements 20.5 bis 20.8 (untere, in Fig. 4 bis 6 nicht sichtbare Spulenelemente) dienen. Das fünfte bis achte Spulenelement 20.5 bis 20.8 der Sensoranordnungen 10 nach Fig. 4 bis 6 entsprechen jeweils dem in Fig. 1 gezeigten fünften bis achten Spulenelement 20.5 bis 20.8 und haben die gleiche Funktion. Das erste bis vierte Spulenelement 20.1 bis 20.4 und das fünfte bis achte Spulenelement 20.5 bis 20.8 der Sensoranordnungen 10 nach Fig. 4 bis 6 bilden eine Spulenelementanordnung 18.

Der Träger 12 ist derart ausgebildet, dass das erste bis vierte Spulenelement 20.1 bis 20.4 in der ersten Ebene A1 und in der zweiten Ebene A2 getragen werden (vgl. Fig. 4 bis 6). Der Träger 12 hat eine die erste Ebene A1 festlegende erste Oberfläche B1 und eine die zweite Ebene A2 festlegende zweite Oberfläche B2. Das erste bis vierte Spulenelement 20.1 bis 20.4 sind auf der ersten bzw. zweiten Oberfläche B1, B2 angeordnet. Die beispielsweise mittig durch die Spulenelemente 20.1, 20.3 verlaufende erste Ebene A1 erstreckt sich parallel zur ersten Oberfläche B1. Die beispielsweise mittig durch die Spulenelemente 20.2, 20.4 verlaufende zweite Ebene A2 erstreckt sich parallel zur zweiten Oberfläche B2. Vorzugsweise sind die beiden Oberflächen B1, B2 parallel zueinander angeordnet. Dadurch wird die Lage bzw. Ausrichtung der ersten und zweiten Ebene A1, A2 festgelegt.

Der Träger 12 ist als ein vorzugsweise plattenförmiger (oder schichtförmiger) Kern einer Leiterplatte ausgebildet. Das erste bis vierte Spulenelement 20.1 bis 20.4 sind als eine gemeinsame Struktur auf dem Träger 12 (d.h. Leiterplattenkern) angeordnet. Dadurch wird eine hohe Genauigkeit bei der Positionierung und Ausrichtung des ersten bis vierten Spulenelements 20.1 bis 20.4 in der ersten und zweiten Ebene A1, A2 erreicht.

Bei der Sensoranordnung 10 nach Fig. 4 ist der Träger 12 durch einen einzigen gemeinsamen Abschnitt zum Tragen des ersten bis vierten Spulenelements 20.1 bis 20.4 gebildet. Hierbei ist der Träger 12 insbesondere einstückig ausgebildet.

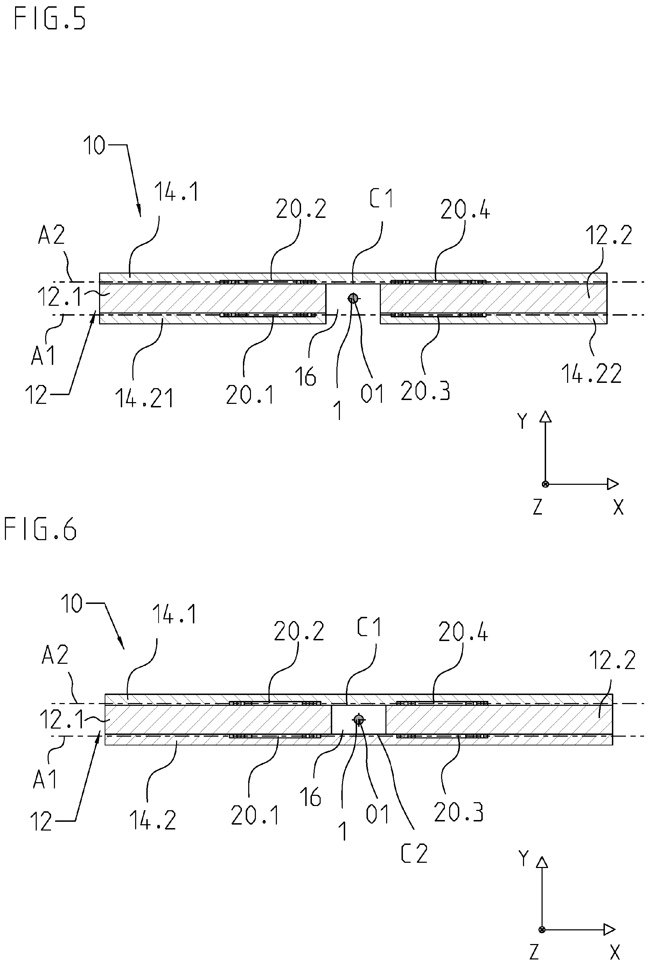

Bei der Sensoranordnung 10 nach Fig. 5 weist der Träger 12 zwei voneinander getrennte Abschnitte 12.1, 12.2 zum Tragen des ersten bis vierten Spulenelements 20.1 bis 20.4 auf. Die beiden Abschnitte 12.1, 12.2 sind über einen auf dem Träger 12 angeordneten, durchgehenden Abschnitt 14.1, insbesondere einen oberen (in Richtung der Y-Achse betrachtet) Schichtstapel (bzw. Schichtpaket), miteinander verbunden. Die beiden Abschnitte 12.1, 12.2 bilden insbesondere den Leiterplattenkern. Ferner sind auf dem Träger 12 der Sensoranordnung 10 nach Fig. 5 zwei weitere voneinander getrennte Abschnitte 14.21, 14.22 angeordnet, die auf einer dem Abschnitt 14.1 abgewandten Seite des Leiterplattenkerns 12.1, 12.2 angeordnet sind. Die beiden Abschnitte 14.21, 14.22 bilden insbesondere einen unteren (in Richtung der Y-Achse betrachtet) Schichtstapel (bzw. Schichtpaket).

Bei der Sensoranordnung 10 nach Fig. 6 weist der Träger 12 zwei voneinander getrennte Abschnitte 12.1, 12.2 zum Tragen des ersten bis vierten Spulenelements 20.1 bis 20.4 auf. Die beiden Abschnitte 12.1, 12.2 sind über zwei auf dem Träger 12 angeordnete, durchgehende Abschnitte 14.1, 14.2 , insbesondere einen oberen und unteren (in Richtung der Y-Achse betrachtet) Schichtstapel (bzw. Schichtpaket), miteinander verbunden. Die beiden Abschnitte 12.1, 12.2 bilden insbesondere den Leiterplattenkern. Die beiden Abschnitte 14.1, 14.2 sind auf verschiedenen Seiten des Leiterplattenkerns 12.1, 12.2 angeordnet.

Der in Fig. 5 bzw. 6 gezeigte Träger 12 kann über den oberen bzw. unteren Schichtstapel (bzw. Schichtpaket) direkt, d.h. ohne den Einsatz eines weiteren Befestigungsabschnitts, mit einem Teil der Drahterodiermaschine verbunden bzw. an diesem befestigt sein. Alternativ kann auch ein weiterer auf dem oberen bzw. unteren Schichtstapel (bzw. Schichtpaket) angeordneter Zwischenabschnitt zur Befestigung des Trägers 12 vorgesehen sein. Der Schichtstapel bzw. das Schichtpaket umfasst beispielsweise eine dem Leiterplattenkern abgewandte Deckschicht.

Wie in Fig. 4 bis 6 gezeigt, hat der Träger 12 eine Ausnehmung 16. Die Ausnehmung 16 erstreckt sich parallel zur Referenzachse O (Z-Achse) durch den Träger 12 hindurch. Das erste bis vierte Spulenelement 20.1 bis 20.4 (obere, in Fig. 4 bis 6 sichtbare Spulenelemente) und das fünfte bis achte Spulenelement 20.5 bis 20.8 (untere, in Fig. 4 bis 6 nicht sichtbare Spulenelemente) sind in Umfangsrichtung um einen Längsabschnitt der Ausnehmung 16 herum verteilt angeordnet. In Richtung der Referenzachse O betrachtet erstreckt sich die Ausnehmung 16 zwischen einem ersten Paar von sich in der zweiten Auslenkrichtung Y einander gegenüberliegenden Spulenelementen 20.1, 20.2 und einem zweiten Paar von sich in der zweiten Auslenkrichtung Y einander gegenüberliegenden Spulenelementen 20.3, 20.4 in der ersten Auslenkrichtung X und zwischen der ersten und zweiten Ebene A1, A2 in der zweiten Auslenkrichtung Y. Der erste Referenzpunkt O1 liegt vorzugsweise im Wesentlichen mittig innerhalb eines Querschnitts der Ausnehmung 16.

In Bezug auf Fig. 4 erstreckt sich die Ausnehmung 16 in der zweiten Auslenkrichtung Y nahezu vollständig durch den Träger 12 hindurch. In Bezug auf Fig. 5 erstreckt sich die Ausnehmung 16 in der zweiten Auslenkrichtung Y durch den unteren Schichtstapel 14.21, 14.22 hindurch bis zu einer inneren Oberfläche C1 des oberen Schichtstapels 14.1 (oder darüber hinaus bis in den oberen Schichtstapel 14.1 hinein). In Bezug auf Fig. 6 erstreckt sich die Ausnehmung 16 in der zweiten Auslenkrichtung Y von einer inneren Oberfläche C1 des oberen Schichtstapels 14.1 bis zu einer inneren Oberfläche C2 des unteren Schichtstapels 14.2.

Vorzugsweise ist die Ausnehmung 16 durch eine Ausfräsung gebildet (vgl. insbesondere Fig. 4 und 5). Die Ausnehmung 16 ist derart ausgebildet, dass die Drahtelektrode 1 in Vorschubrichtung A vollständig durch den Träger 12 hindurch und in der ersten und zweiten Auslenkrichtung X, Y innerhalb einer Querausdehnung der Ausnehmung 16 bewegt werden kann.

Bei der Sensoranordnung 10 nach Fig. 1 bis 3 bzw. bei den Sensoranordnungen 10 nach Fig. 4 bis 6 sind das erste bis vierte Spulenelement 20.1 bis 20.4 in Bezug auf den ersten Referenzpunkt O1 symmetrisch angeordnet. D.h., der erste Referenzpunkt O1 liegt in der Mitte der durch das erste bis vierte Spulenelement 20.1 bis 20.4 gebildeten Einheit.

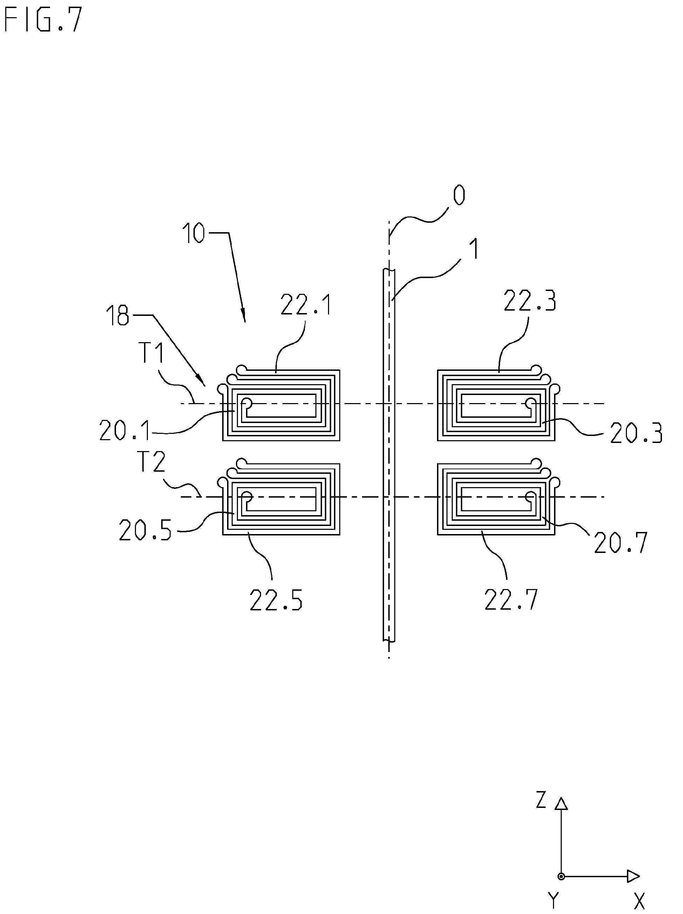

Fig. 7 zeigt eine Seitenansicht einer beispielhaften Sensoranordnung 10 mit einer Spulenelementanordnung 18. Die Sensoranordnung 10 nach Fig. 7 unterscheidet sich von der Sensoranordnung 10 nach Fig. 1 bis 3 lediglich dadurch, dass die Spulenelementanordnung 18 ein dem ersten bis vierten Spulenelement 20.1 bis 20.4 jeweils zugeordnetes Referenzspulenelement 22.1 bis 22.4 und ein dem fünften bis achten Spulenelement 20.5 bis 20.8 jeweils zugeordnetes Referenzspulenelement 22.5 bis 22.8 aufweist. In der Seitenansicht von Fig. 7 sind die den Spulenelementen 20.1, 20.3 jeweils zugeordneten Referenzspulenelemente 22.1, 22.3 sichtbar, während die den Spulenelementen 20.2, 20.4 jeweils zugeordneten Referenzspulenelemente 22.2, 22.4 nicht sichtbar sind. Ferner sind in der Seitenansicht von Fig. 7 die den Spulenelementen 20.5, 20.7 jeweils zugeordneten Referenzspulenelemente 22.5, 22.7 sichtbar, während die den Spulenelementen 20.6, 20.8 jeweils zugeordneten Referenzspulenelemente 22.6, 22.8 nicht sichtbar sind. Die Referenzspulenelemente 22.1 bis 22.4 dienen zum Erzeugen eines ersten bis vierten Referenzsignals R1 bis R4 zur Normierung des ersten bis vierten Messsignals S1 bis S4. Die Referenzspulenelemente 22.5 bis 22.8 dienen zum Erzeugen eines fünften bis achten Referenzsignals R5 bis R8 zur Normierung des fünften bis achten Messsignals S5 bis S8.

Die Referenzspulenelemente 22.1 bis 22.4 und 22.5 bis 22.8 sind derart angeordnet, dass sie das erste bis vierte Spulenelement 20.1 bis 20.4 bzw. das fünfte bis achte Spulenelement 20.5 bis 20.8 beispielsweise konzentrisch umgeben (vgl. Fig. 7). Dabei sind die Referenzspulenelemente 22.1 bis 22.4 und 22.5 bis 22.8 derart ausgebildet, dass sie im Wesentlichen das gleiche magnetische Wechselfeld 11 wie das erste bis vierte Spulenelement 20.1 bis 20.4 bzw. das fünfte bis achte Spulenelement 20.5 bis 20.8 erfassen.

Anstelle der in Fig. 7 gezeigten Anordnung können die Referenzspulenelemente 22.1 bis 22.4 bzw. 22.5 bis 22.8 auch ober- und unterhalb (oder vor und hinter) des ersten bis vierten Spulenelements 20.1 bis 20.4 bzw. des fünften bis achten Spulenelements 20.5 bis 20.8 sowie in unterschiedlichen Dimensionen bzw. Umfangsgrößen, jeweils in Richtung der Z- bzw. Y-Achse betrachtet, angeordnet sein. Dabei sollte die Position bzw. (transversale) Auslenkung der Drahtelektrode 1 keinen Einfluss auf die Summe des ersten bis vierten Referenzsignals R1 bis R4 bzw. des fünften bis achten Referenzsignals R5 bis R8 haben.

Fig. 8 zeigt eine schematische Darstellung zur Veranschaulichung eines zu erfassenden Winkels α der Drahtelektrode 1 bei einer Auslenkung ΔX1, ΔX2 derselben in Bezug auf den ersten und einen zweiten Referenzpunkt O1, O2 in der ersten Auslenkrichtung X. Der erste Referenzpunkt O1 liegt in der ersten Messebene T1. Der zweite Referenzpunkt O2 liegt in der zweiten Messebene T2. Der Abstand zwischen dem ersten und zweiten Referenzpunkt O1, O2 (bzw. zwischen der ersten und zweiten Messebene T1, T2) in der Z-Richtung ist mit L bezeichnet. Die Auslenkung

$\Delta$X1 in Fig. 8 entspricht der in Fig. 3 gezeigten Auslenkung $\Delta$X1. In Fig. 8 ist der Winkel $\alpha$ in der XZ-Ebene, d.h. lediglich für den Fall einer Auslenkung der Drahtelektrode 1 in der ersten Auslenkrichtung X, dargestellt. Für den Fall einer Auslenkung der Drahtelektrode 1 in der zweiten Auslenkrichtung Y gelten die Ausführungen analog. Die Drahtelektrode 1 ist in Fig. 8 im unausgelenkten Zustand, d.h. in dem Zustand, in dem sie sich kollinear zur Referenzachse O durch den ersten und zweiten Referenzpunkt O1, O2 erstreckt, und in einem ausgelenkten Zustand gezeigt. In dem in Fig. 8 gezeigten, ausgelenkten Zustand verläuft die Drahtelektrode 1 gegenüber einer zur Referenzachse O parallelen Richtung (Z-Richtung) abgewinkelt. Die Drahtelektrode 1 kann im ausgelenkten Zustand auch parallel zur Referenzachse O, d.h. in Z-Richtung, verlaufen. In diesem Fall sind die Auslenkung $\Delta$X1 in Bezug auf den ersten Referenzpunkt O1 in der ersten Auslenkrichtung X und die Auslenkung $\Delta$X2 in Bezug auf den zweiten Referenzpunkt O2 in der ersten Auslenkrichtung X gleich groß (d.h. $\alpha = 0$).

In Bezug auf Fig. 8 erfolgt eine Auswertung dahingehend, dass auf Grundlage der Auslenkung $\Delta$X1, der Auslenkung $\Delta$X2 und des Abstands L zwischen dem ersten und zweiten Referenzpunkt O1, O2 der in Bezug auf die Z-Richtung definierte Winkel $\alpha$ der Drahtelektrode 1 erhalten wird. Die Auswertung erfolgt beispielsweise unter Verwendung der folgenden Beziehung:

$$\tan \alpha = (\Delta X2 - \Delta X1)/L \qquad \text{(Gl. 1a)}$$

Für den in Fig. 8 nicht gezeigten Fall der Auslenkung der Drahtelektrode 1 in der zweiten Auslenkrichtung Y (d.h. der Winkel $\alpha$ liegt in der YZ-Ebene) erfolgt eine Auswertung beispielsweise unter Verwendung der folgenden Beziehung:

$$\tan \alpha = (\Delta Y2 - \Delta Y1)/L \qquad \text{(Gl. 1b)}$$

Dabei sind $\Delta$Y1, $\Delta$Y2 den Auslenkungen $\Delta$X1, $\Delta$X2 entsprechende Auslenkungen in der zweiten Auslenkrichtung Y. Die Auslenkungen $\Delta$X1, $\Delta$X2 bzw. $\Delta$Y1, $\Delta$Y2 ergeben sich insbesondere aus den nachfolgend im Zusammenhang mit Fig. 10 genannten Gleichungen 2 bis 5. Die Gleichungen 2 bis 5 beruhen auf der Kenntnis (bzw. Ermittlung) des ersten bis achten Messsignals S1 bis S8.

Fig. 10 zeigt ein Blockdiagramm einer beispielhaften Sensoranordnung 10 mit einer ersten und zweiten Auswerteeinheit 4.1, 4.2 zur Ermittlung des in Fig. 8 veranschaulichten Winkels a. Die Sensoranordnung 10 nach Fig. 10 umfasst die Spulenelementanordnung 18 einer der im Vorhergehenden beschriebenen Sensoranordnungen 10. Die Auswerteeinheit 4.1 dient dazu, die Auslenkung $\Delta$X1, $\Delta$Y1 in der ersten Messebene T1 auf Grundlage des ersten bis vierten Messsignals S1 bis S4 zu ermitteln. Ferner dient die Auswerteeinheit 4.1 dazu, die Auslenkung $\Delta$X2, $\Delta$Y2 in der zweiten Messebene T2 auf Grundlage des fünften bis achten Messsignals S5 bis S8 zu ermitteln. Die Auswerteeinheit 4.1 ist mit der Spulenelementanordnung 18 gekoppelt. Die Spulenelementanordnung 18 umfasst das erste bis achte Spulenelement 20.1 bis 20.8 zur Erzeugung des ersten bis achten Messignals S1 bis S8. Die Auswerteeinheit 4.2 dient zur Durchführung der vorgenannten Auswertung (z.B. unter Verwendung von Gleichung 1a bzw. 1b).

Im Folgenden wird die Funktion der Auswerteeinheit 4.1 anhand der Spulenelemente 20.1 bis 20.8 der Sensoranordnung 10 nach Fig. 1 bis 3 näher erläutert. Das erste bis vierte Spulenelement 20.1 bis 20.4 bilden ein erstes und zweites Paar von Spulenelementen 20.1, 20.2; 20.3, 20.4. Die Spulenelemente 20.1, 20.2 des ersten Paares und die Spulenelemente 20.3, 20.4 des zweiten Paares liegen sich jeweils in Bezug auf den ersten Referenzpunkt O1 in der zweiten Auslenkrichtung Y einander gegenüber. Die Spulenelemente 20.1, 20.2 des ersten Paares sind in Bezug auf den ersten Referenzpunkt O1 auf einer ersten Seite angeordnet. Die Spulenelemente 20.3, 20.4 des zweiten Paares sind in Bezug auf den ersten Referenzpunkt O1 auf einer der ersten Seite in der ersten Auslenkrichtung X gegenüberliegenden zweiten Seite angeordnet.

Die Spulenelemente 20.1, 20.2 des ersten Paares sind zum Erzeugen des ersten und zweiten Messsignals S1, S2 ausgebildet. Die Spulenelemente 20.3, 20.4 des zweiten Paares sind zum Erzeugen des dritten und vierten Messsignals S3, S4 ausgebildet. Durch die Auswerteeinheit 4.1 wird die Auslenkung $\Delta$X1 in der ersten Messebene T1 in der ersten Auslenkrichtung X auf Grundlage eines Vergleichs der Summe des ersten und zweiten Messsignals S1, S2 und der Summe des dritten und vierten Messsignals S3, S4 ermittelt. Beispielsweise erfolgt die Ermittlung der Auslenkung $\Delta$X1 durch eine Differenzbildung der Summe des ersten und zweiten Messsignals S1, S2 und der Summe des dritten und vierten Messsignals S3, S4 und eine anschließende Normierung unter Verwendung der Summe des ersten bis vierten Messsignals S1 bis S4. Hierzu wird beispielsweise die folgende Beziehung verwendet:

$$\Delta X1 = c1 \times [(S1 + S2) - (S3 + S4)]/(S1 + S2 + S3 + S4) \qquad \text{(Gl. 2)}$$

Dabei ist c1 ein vorbestimmter Umrechnungsfaktor für die Umrechnung der (dimensionslosen) signalabhängigen Größe [(S1+S2)-(S3+S4)]/(S1+S2+S3+S4) in ein Längenmaß.

Das erste bis vierte Spulenelement 20.1 bis 20.4 bilden ein drittes und viertes Paar von Spulenelementen 20.1, 20.3; 20.2, 20.4. Die Spulenelemente 20.1, 20.3 des dritten Paares und die Spulenelemente 20.2, 20.4 des vierten Paares liegen sich jeweils in Bezug auf den ersten Referenzpunkt O1 in der ersten Auslenkrichtung X einander gegenüber. Die Spulenelemente 20.1, 20.3 des dritten Paares sind in der ersten Ebene A1 angeordnet, und die Spulenelemente 20.2, 20.4 des vierten Paares sind in der zweiten Ebene A2 angeordnet. Die Spulenelemente 20.1, 20.3 des dritten Paares sind zum Erzeugen des ersten und dritten Messsignals S1, S3 ausgebildet. Die Spulenelemente 20.2, 20.4 des vierten Paares sind zum Erzeugen des zweiten und vierten Messsignals S2, S4 ausgebildet. Durch die Auswerteeinheit 4.1 wird die Auslenkung $\Delta Y1$ in der ersten Messebene T1 in der zweiten Auslenkrichtung Y auf Grundlage eines Vergleichs der Summe des ersten und dritten Messsignals S1, S3 und der Summe des zweiten und vierten Messsignals S2, S4 ermittelt. Beispielsweise erfolgt die Ermittlung der Auslenkung $\Delta Y1$ durch eine Differenzbildung der Summe des ersten und dritten Messsignals S1, S3 und der Summe des zweiten und vierten Messsignals S2, S4 und eine anschließende Normierung unter Verwendung der Summe des ersten bis vierten Messsignals S1 bis S4. Hierzu wird beispielsweise die folgende Beziehung verwendet:

$$\Delta Y1 = c2 \times [(S1 + S3) - (S2 + S4)]/(S1 + S2 + S3 + S4) \qquad \text{(Gl. 3)}$$

Dabei ist c2 ein vorbestimmter Umrechnungsfaktor für die Umrechnung der (dimensionslosen) signalabhängigen Größe [(S1+S3)-(S2+S4)]/(S1+S2+S3+S4) in ein Längenmaß.

In analoger Weise wird durch die Auswerteeinheit 4.1 die Auslenkung $\Delta X2$, $\Delta Y2$ in der zweiten Messebene T2 auf Grundlage des fünften bis achten Messsignals S5 bis S8 ermittelt. Hierzu werden beispielsweise folgende Beziehungen verwendet:

$$\Delta X2 = c3 \times [(S5 + S6) - (S7 + S8)]/(S5 + S6 + S7 + S8) \qquad \text{(Gl. 4)}$$

$$\Delta Y2 = c4 \times [(S5 + S7) - (S6 + S8)]/(S5 + S6 + S7 + S8) \qquad \text{(Gl. 5)}$$

Dabei sind c3, c4 vorbestimmte Umrechnungsfaktoren für die Umrechnung der (dimensionslosen) signalabhängigen Größen [(S5+S6)-(S7+S8)]/(S5+S6+S7+S8) bzw. [(S5+S7)-(S6+S8)]/(S5+S6+S7+S8) in ein jeweiliges Längenmaß.

Anstelle der oben genannten Normierung unter Verwendung der Summe des ersten bis vierten Messsignals S1 bis S4 bzw. der Summe des fünften bis achten Messsignals S5 bis S8 kann auch eine Normierung unter Verwendung des ersten bis vierten Referenzsignals R1 bis R4 bzw. des fünften bis achten Referenzsignals R5 bis R8 durchgeführt werden.

Vorzugsweise ist jede Auswerteeinheit 4.1, 4.2 als Teil der Sensoranordnung 10 vorgesehen (vgl. Fig. 10). Die Auswerteeinheit 4.2 kann auch weggelassen werden. Die Auswerteeinheit 4.1 oder die beiden Auswerteeinheiten 4.1, 4.2 bilden eine Einheit zur Signalverarbeitung. Diese Einheit zur Signalverarbeitung ist vorzugsweise unabhängig bzw. getrennt von einer Steuereinheit der Drahterodiermaschine vorgesehen (Fall (i)). Alternativ kann die Einheit zur Signalverarbeitung auch in der Steuereinheit integriert sein (Fall (ii)). In beiden Fällen (i), (ii) umfasst die Sensoranordnung 10 die Einheit zur Signalverarbeitung.

Im Fall (i) ist die Steuereinheit (nicht gezeigt) dazu ausgebildet, die durch die Einheit zur Signalverarbeitung erhaltenen Signale (z.B. Signale, die die Auslenkung $\Delta X1$, $\Delta Y1$, die Auslenkung $\Delta X2$, $\Delta Y2$ und/oder den Winkel $\alpha$ angeben) als Eingangssignale zu empfangen und eine Ansteuerung der Drahtelektrode 1 zur Nachregelung derselben bzw. zur Korrektur deren Vorschubbahn auf Grundlage der empfangenen Signale durchzuführen. Der Einsatz einer entsprechenden, in der Steuereinheit integrierten Einheit zur Signalverarbeitung ist dabei nicht nötig. Im Fall (ii) ist die Steuereinheit (nicht gezeigt) dazu ausgebildet, die durch die Spulenelementanordnung 18 erhaltenen Signale (d.h. das erste bis achte Messsignal S1 bis S8) als Eingangssignale zu empfangen und die Ansteuerung der Drahtelektrode 1 auf Grundlage der empfangenen Signale unter Verwendung der in der Steuereinheit integrierten Einheit zur Signalverarbeitung durchzuführen.

Bezug nehmend auf Fig. 9 verläuft das magnetische Wechselfeld 11 zumindest in der ersten Messebene T1. Zur Erzeugung desselben ist ein Signalgenerator 3 der Drahterodiermaschine vorgesehen. Der Signalgenerator 3 ist mit der Drahtelektrode 1 gekoppelt und dient zum Erzeugen eines Wechselstromimpulses (z.B. Strompulse mit einer Stromstärke von mehreren Ampere und einer Pulsfrequenz im Frequenzbereich zwischen 1 kHz und 1 MHz). Die Drahtelektrode 1 ist derart ausgebildet, dass bei einer Beaufschlagung derselben mit dem Wechselstromimpuls das zu erfassende magnetische Wechselfeld 11 erzeugt wird.

Das erste bis vierte Spulenelement 20.1 bis 20.4 haben vorzugsweise jeweils eine rechteckförmige Spulenfläche, deren Mittelpunkte (bzw. Mittellinien) in der ersten Messebene T1 liegen (vgl. Fig. 2). Das fünfte bis achte Spulenelement 20.5 bis 20.8 haben vorzugsweise jeweils eine rechteckförmige Spulenfläche, deren Mittelpunkte (bzw. Mittellinien) in der zweiten Messebene T2 liegen (vgl. Fig. 2). Das erste bis vierte Spulenelement 20.1 bis 20.4 und das fünfte bis achte Spulenelement 20.5 bis 20.8 dienen insbesondere zur induktiven Abtastung des erzeugten magnetischen Wechselfelds 11.

Das erste bis vierte Spulenelement 20.1 bis 20.4 und/oder das fünfte bis achte Spulenelement 20.5 bis 20.8 (bzw. die Referenzspulenelemente 22.1 bis 22.8) können jeweils ein- oder mehrlagig ausgebildet sein. Vorzugsweise sind das erste bis vierte Spulenelement 20.1 bis 20.4 bzw. das fünfte bis achte Spulenelement 20.5 bis 20.8 jeweils durch einen Schichtstapel aus Isolationsmaterial und elektrisch leitfähigem Material (z.B. Kupfer) gebildet (Multilayer).

Der Träger 12 besteht beispielsweise aus keramischem Material oder Kunststoff. Die Spulenelemente 20.1 bis 20.8 (bzw. die Referenzspulenelemente 22.1 bis 22.8) können durch eine Strukturierung des Trägers 12 unter Verwendung eines Lasers erzeugt bzw. hergestellt werden. Es kann insbesondere eine LPKF-Technik oder MID-Technik eingesetzt werden.

Durch die zuvor genannte Normierung können Einflüsse auf das jeweilige Messsignal S1 bis S4 bzw. S5 bis S8 (Induktionssignal), die sich durch Änderungen bzw. Schwankungen der Stromstärke und/oder Pulsfrequenz während der Bearbeitung des Werkstücks ergeben, kompensiert werden.

Die erfindungsgemäße Detektion der Drahtelektrode 1 kann dynamisch erfolgen. D.h., es können nicht nur eine statische (unveränderliche) Auslenkung ΔX1, ΔY1, sondern auch eine sich zeitlich ändernde Auslenkung ΔX1, ΔY1, beispielsweise im Fall einer Schwingung der Drahtelektrode 1, erfasst werden.

Durch die Erfindung kann eine aufwendige, nachträgliche Justage von einzelnen Spulenelementen in der Endmontage der Sensoranordnung 10 vermieden werden. Im Gegensatz zu bekannten Lösungen mit optischen Sensoren oder Schleifkontakten ist die Erfindung unempfindlich auf Verschmutzungen und weist keinen Verschleiß auf.

## Patentansprüche

1.  Sensoranordnung (10) zum Erfassen einer Auslenkung (ΔX1, ΔY1) einer Drahtelektrode (1) einer Drahterodiermaschine in Bezug auf einen auf einer Referenzachse (O) liegenden ersten Referenzpunkt (O1) in einer ersten Messebene (T1), wobei die erste Messebene (T1) durch den ersten Referenzpunkt (O1) und durch eine erste Auslenkrichtung (X) und eine zur ersten Auslenkrichtung (X) senkrecht verlaufende zweite Auslenkrichtung (Y) definiert wird, wobei die erste und zweite Auslenkrichtung (X, Y) jeweils senkrecht zur Referenzachse (O) verlaufen, **dadurch gekennzeichnet, dass**

    die Sensoranordnung (10) eine Spulenelementanordnung (18) aufweist, wobei die Spulenelementanordnung (18) mindestens ein in der ersten Messebene (T1) angeordnetes erstes bis viertes Spulenelement (20.1 bis 20.4) zum Erfassen eines durch die Drahtelektrode (1) erzeugten magnetischen Wechselfelds (11) und zum Erzeugen eines ersten bis vierten Messsignals (S1 bis S4) aufweist, und dass das erste bis vierte Spulenelement (20.1 bis 20.4) in einer ersten Ebene (A1) und in einer zweiten Ebene (A2) derart angeordnet sind, dass sie sich in Bezug auf den ersten Referenzpunkt (O1) jeweils paarweise in der ersten und zweiten Auslenkrichtung (X, Y) einander gegenüberliegen, wobei sich die erste Ebene (A1) und die zweite Ebene (A2) jeweils parallel zur Referenzachse (O) erstrecken, und wobei die erste und zweite Ebene (A1, A2) in Bezug auf den ersten Referenzpunkt (O1) in der zweiten Auslenkrichtung (Y) voneinander beabstandet und einander gegenüberliegend angeordnet sind.

2.  Sensoranordnung (10) nach Anspruch 1, wobei die Sensoranordnung (10) einen Träger (12) aufweist, wobei der Träger (12) derart ausgebildet ist, dass das erste bis vierte Spulenelement (20.1 bis 20.4) in der ersten Ebene (A1) und in der zweiten Ebene (A2) getragen werden.

3.  Sensoranordnung (10) nach Anspruch 2, wobei der Träger (12) eine zur ersten Ebene (A1) parallele erste Oberfläche (B1) und eine zur zweiten Ebene (A2) parallele zweite Oberfläche (B2) hat.

4.  Sensoranordnung (10) nach Anspruch 2 oder 3, wobei der Träger (12) als ein Kern einer Leiterplatte ausgebildet ist.

5.  Sensoranordnung (10) nach einem der Ansprüche 2 bis 4, wobei der Träger (12) durch einen einzigen gemeinsamen Abschnitt zum Tragen des ersten bis vierten Spulenelements (20.1 bis 20.4) gebildet ist.

6. Sensoranordnung (10) nach einem der Ansprüche 2 bis 4, wobei der Träger (12) zwei voneinander getrennte Abschnitte (12.1, 12.2) zum Tragen des ersten bis vierten Spulenelements (20.1 bis 20.4) aufweist, wobei die beiden Abschnitte (12.1, 12.2) über mindestens einen weiteren Abschnitt (14.1) miteinander verbunden sind.

7. Sensoranordnung (10) nach einem der Ansprüche 2 bis 6, wobei der Träger (12) eine Ausnehmung (16) hat.

8. Sensoranordnung (10) nach Anspruch 7, wobei sich die Ausnehmung (16) parallel zur Referenzachse (O) durch den Träger (12) hindurch erstreckt.

9. Sensoranordnung (10) nach Anspruch 7 oder 8, wobei sich die Ausnehmung (16), in Richtung der Referenzachse (O) betrachtet, zwischen einem ersten Paar von sich in der zweiten Auslenkrichtung (Y) einander gegenüberliegenden Spulenelementen (20.1, 20.2) und einem zweiten Paar von sich in der zweiten Auslenkrichtung (Y) einander gegenüberliegenden Spulenelementen (20.3, 20.4) in der ersten Auslenkrichtung (X) und zwischen der ersten und zweiten Ebene (A1, A2) in der zweiten Auslenkrichtung (Y) erstreckt.

10. Sensoranordnung (10) nach einem der Ansprüche 7 bis 9, wobei der erste Referenzpunkt (O1) innerhalb eines Querschnitts der Ausnehmung (16) liegt.

11. Sensoranordnung (10) nach einem der vorhergehenden Ansprüche, wobei das erste bis vierte Spulenelement (20.1 bis 20.4) in Bezug auf den ersten Referenzpunkt (O1) symmetrisch angeordnet sind.

12. Sensoranordnung (10) nach einem der vorhergehenden Ansprüche, wobei das erste bis vierte Spulenelement (20.1 bis 20.4) als eine gemeinsame Struktur auf dem Träger 12 ausgebildet sind.

13. Sensoranordnung (10) nach einem der vorhergehenden Ansprüche, wobei die Sensoranordnung (10) derart ausgebildet ist, dass die Auslenkung ($\Delta X1$, $\Delta Y1$) in der ersten Messebene (T1) auf Grundlage des ersten bis vierten Messsignals (S1 bis S4) erhalten wird.

14. Drahterodiermaschine mit einer Sensoranordnung (10) nach einem der vorhergehenden Ansprüche und einer Drahtelektrode (1), wobei sich die Drahtelektrode (1) in einem unausgelenkten Zustand kollinear zur Referenzachse (O) durch den ersten Referenzpunkt (O1) erstreckt.

15. Drahterodiermaschine nach Anspruch 14, wobei die Drahterodiermaschine einen Signalgenerator (3) zum Erzeugen eines Wechselstromimpulses aufweist, wobei die Drahtelektrode (1) derart ausgebildet ist, dass bei einer Beaufschlagung derselben mit dem Wechselstromimpuls das zu erfassende magnetische Wechselfeld (11) erzeugt wird.


**Claims**

1. Sensor arrangement (10) for detecting a deflection ($\Delta X1$, $\Delta Y1$) of a wire electrode (1) of a wire eroding machine with respect to a first reference point (01) on a reference axis (O) in a first measurement plane (T1), wherein the first measurement plane (T1) is defined by the first reference point (01) and by a first deflection direction (X) and a second deflection direction (Y) running perpendicular to the first deflection direction (X), wherein the first and second deflection directions (X, Y) each run perpendicular to the reference axis (O), **characterized in that**

the sensor arrangement (10) has a coil element arrangement (18), wherein the coil element arrangement (18) has at least a first to fourth coil element (20.1 to 20.4), arranged in the first measurement plane (T1), for detecting an alternating magnetic field (11) generated by the wire electrode (1) and for generating a first to fourth measurement signal (S1 to S4), and
**in that** the first to fourth coil elements (20.1 to 20.4) are arranged in a first plane (A1) and in a second plane (A2) in such a manner that they are each opposite one another in pairs in the first and second deflection directions (X, Y) with respect to the first reference point (O1), wherein the first plane (A1) and the second plane (A2) each extend parallel to the reference axis (O), and wherein the first and second planes (A1, A2) are arranged at a distance from one another and opposite one another in the second deflection direction (Y) with respect to the first reference point (01).

2. Sensor arrangement (10) according to Claim 1, wherein the sensor arrangement (10) has a carrier (12), wherein the carrier (12) is designed in such a manner that the first to fourth coil elements (20.1 to 20.4) are carried in the first plane (A1) and in the second plane (A2).

3. Sensor arrangement (10) according to Claim 2, wherein the carrier (12) has a first surface (B1) parallel to the first plane (A1) and a second surface (B2) parallel to the second plane (A2).

4. Sensor arrangement (10) according to Claim 2 or 3, wherein the carrier (12) is in the form of a core of a printed circuit board.

5. Sensor arrangement (10) according to one of Claims 2 to 4, wherein the carrier (12) is formed by a single common section for carrying the first to fourth coil elements (20.1 to 20.4).

6. Sensor arrangement (10) according to one of Claims 2 to 4, wherein the carrier (12) has two sections (12.1, 12.2), separated from one another, for carrying the first to fourth coil elements (20.1 to 20.4), wherein the two sections (12.1, 12.2) are connected to one another via at least one further section (14.1).

7. Sensor arrangement (10) according to one of Claims 2 to 6, wherein the carrier (12) has a recess (16).

8. Sensor arrangement (10) according to Claim 7, wherein the recess (16) extends through the carrier (12) in a manner parallel to the reference axis (0).

9. Sensor arrangement (10) according to Claim 7 or 8, wherein the recess (16), as viewed in the direction of the reference axis (O), extends, in the first deflection direction (X), between a first pair of coil elements (20.1, 20.2) opposite one another in the second deflection direction (Y) and a second pair of coil elements (20.3, 20.4) opposite one another in the second deflection direction (Y) and extends, in the second deflection direction (Y), between the first and second planes (A1, A2).

10. Sensor arrangement (10) according to one of Claims 7 to 9, wherein the first reference point (01) lies within a cross section of the recess (16).

11. Sensor arrangement (10) according to one of the preceding claims, wherein the first to fourth coil elements (20.1 to 20.4) are arranged symmetrically with respect to the first reference point (01).

12. Sensor arrangement (10) according to one of the preceding claims, wherein the first to fourth coil elements (20.1 to 20.4) are in the form of a common structure on the carrier (12).

13. Sensor arrangement (10) according to one of the preceding claims, wherein the sensor arrangement (10) is designed in such a manner that the deflection ($\Delta$X1, $\Delta$Y1) in the first measurement plane (T1) is achieved on the basis of the first to fourth measurement signals (S1 to S4).

14. Wire eroding machine having a sensor arrangement (10) according to one of the preceding claims and a wire electrode (1), wherein the wire electrode (1) extends through the first reference point (01) collinearly with respect to the reference axis (O) in an undeflected state.

15. Wire eroding machine according to Claim 14, wherein the wire eroding machine has a signal generator (3) for generating an AC pulse, wherein the wire electrode (1) is designed in such a manner that the alternating magnetic field (11) to be detected is produced when the AC pulse is applied to said wire electrode.

**Revendications**

1. Ensemble formant capteur (10) destiné à détecter une déviation ($\Delta$X1, $\Delta$Y1) d'une électrode filaire (1) d'une machine d'étincelage par fil par rapport à un premier point de référence (O1), situé sur un axe de référence (O), dans un premier plan de mesure (T1), le premier plan de mesure (T1) étant défini par le premier point de référence (O1) et par une première direction de déviation (X) et une deuxième direction de déviation (Y) s'étendant perpendiculairement à la première direction de déviation (X), les première et deuxième directions de déviation (X, Y) s'étendant chacune perpendiculairement à l'axe de référence (O), **caractérisé en ce que**

l'ensemble formant capteur (10) comporte un ensemble d'élément de bobine (18), l'ensemble d'éléments de bobine (18) comportant au moins un premier à un quatrième élément de bobine (20.1 à 20.4) disposés dans le premier plan de mesure (T1) et destinés à détecter un champ magnétique alternatif (11) généré par l'électrode filaire (1) et générer un premier à un quatrième signal de mesure (S1 à S4) et

les premier à quatrième éléments de bobine (20.1 à 20.4) sont disposés dans un premier plan (A1) et dans un deuxième plan (A2) de manière à se faire face par paires par rapport au premier point de référence (O1) dans la première et la deuxième direction de déviation (X, Y), le premier plan (A1) et le deuxième plan (A2) s'étendant chacun parallèlement à l'axe de référence (O), et le premier et le deuxième plan (A1, A2) étant espacés l'un de l'autre par rapport au premier point de référence (O1) dans la deuxième direction de déviation (Y) et étant disposés l'un en face de l'autre.

2. Ensemble formant capteur (10) selon la revendication 1, l'ensemble formant capteur (10) comporte un support (12), le support (12) étant conçu de manière à ce que les premier à quatrième éléments de bobine (20.1 à 20.4) soient portés dans le premier plan (A1) et dans le deuxième plan (A2).

3. Ensemble formant capteur (10) selon la revendication 2, le support (12) comportant une première surface (B1) parallèle au premier plan (A1) et une deuxième surface (B2) parallèle au deuxième plan (A2).

4. Ensemble formant capteur (10) selon la revendication 2 ou 3, le support (12) étant conçu comme un noyau d'une carte de circuit imprimé.

5. Ensemble formant capteur (10) selon l'une des revendications 2 à 4, le support (12) étant formé par une seule portion commune destinée à porter les premier à quatrième éléments de bobine (20.1 à 20.4).

6. Ensemble formant capteur (10) selon l'une des revendications 2 à 4, le support (12) comportant deux portions séparées (12.1, 12.2) destinées à porter les premier à quatrième éléments de bobine (20.1 à 20.4), les deux portions (12.1, 12.2) étant reliées l'une à l'autre par au moins une autre portion (14.1).

7. Ensemble formant capteur (10) selon l'une des revendications 2 à 6, le support (12) comportant un évidement (16).

8. Ensemble formant capteur (10) selon la revendication 7, l'évidement (16) s'étendant à travers le support (12) parallèlement à l'axe de référence (0).

9. Ensemble formant capteur (10) selon la revendication 7 ou 8, l'évidement (16), vu dans la direction de l'axe de référence (O), s'étendant dans la première direction de déviation (X), entre une première paire d'éléments de bobine (20.1, 20.2) qui se font face dans la deuxième direction de déviation (Y) et une deuxième paire d'éléments de bobine (20.3, 20.4) qui se font face dans la deuxième direction de déviation (Y), et dans la deuxième direction de déviation (Y) entre le premier et le deuxième plan (A1, A2).

10. Ensemble formant capteur (10) selon l'une des revendications 7 à 9, le premier point de référence (O 1) étant situé dans une section transversale de l'évidement (16).

11. Ensemble formant capteur (10) selon l'une des revendications précédentes, les premier à quatrième éléments de bobine (20.1 à 20.4) étant disposés symétriquement par rapport au premier point de référence (O1).

12. Ensemble formant capteur (10) selon l'une des revendications précédentes, les premier à quatrième éléments de bobine (20.1 à 20.4) étant conçus comme une structure commune sur le support 12.

13. Ensemble formant capteur (10) selon l'une des revendications précédentes, l'ensemble formant capteur (10) étant conçu de manière à ce que la déviation ($\Delta$X1, $\Delta$Y1) dans le premier plan de mesure (T1) est obtenue sur la base des premier à quatrième signaux de mesure (S1 à S4).

14. Machine d'étincelage par fil comprenant un ensemble formant capteur (10) selon l'une des revendications précédentes et une électrode filaire (1), l'électrode filaire (1) s'étendant dans un état non dévié de manière colinéaire à l'axe de référence (O) passant par le premier point de référence (01).

15. Machine d'étincelage par fil selon la revendication 14, la machine d'étincelage par fil comportant un générateur de signal (3) destiné à générer une impulsion de courant alternatif, l'électrode filaire (1) étant conçue de manière à générer le champ magnétique alternatif (11) à détecter lorsqu'elle est soumise à l'impulsion de courant alternatif.

FIG.1

FIG.2

FIG.3

FIG.4

FIG.5

FIG.6

FIG.7

FIG.8

FIG.9

FIG.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2826270 A1